# EUROPEAN PATENT SPECIFICATION

(11) **EP 1 181 965 B1**
(45) Date of publication and mention of the grant of the patent: **08.03.2006**
(21) Application number: 99952659.3
(22) Date of filing: 22.10.1999
(51) Int. Cl.: B01D 45/08, B01D 1/00

(54) **DEVICE FOR CLEANING A FLUID IN THE FORM OF A VAPOR FROM A CIRCUIT**
VORRICHTUNG ZUR REINIGUNG EINER FLÜSIGKEIT IN FORM VON DAMPF AUS EINEM KREISLAUF
APPAREIL PERMETTANT DE LAVER UN FLUIDE SOUS FORME DE VAPEUR PROVENANT D'UN CIRCUIT

(30) Priority: 31.03.1999 ES 9900649; 14.05.1999 ES 9901029
(43) Date of publication of application: 27.02.2002
(73) Proprietor: Mora Vallejo, Nicasio Paulino, 13670 Villarrubia de los Ojos (ES)
(72) Inventor: Mora Vallejo, Nicasio Paulino, 13670 Villarrubia de los Ojos (ES)
(74) Representative: Plaza Fernandez-Villa, Luis
(86) International application number: PCT/ES1999/000339
(87) International publication number: WO 2000/059605

(56) References cited:
- CH-A- 64 277
- PATENT ABSTRACTS OF JAPAN vol. 1999, no. 08 30 June 1999 & JP 11 076 723 A (MITSUBISHI ELECTRIC CORP) 23 March 1999

## Description

### OBJECT OF THE INVENTION

The present invention relates to an apparatus specially designed to clean vapour fluids generated by circuits, thus obtaining the separation of chemical compounds included in industrial wastewaters - preferably those waters generated by electrolysis processes -, and whose operation is based on low temperature wastewater distillation in a controlled atmosphere.

The object of this invention is to obtain, by means of the above mentioned device, purified water complying wastewater legal established standards. Applications range from sewage/industry waters cleaning or purification to cases in which industrial waste is mixed with vapour, since purification is applied to vapour itself.

### FIELD OF THE INVENTION

The applications of the present invention range from industrial areas devoted to industrial wastewater treatment, the cleaning and/or purification of any industrial waste mixed with vapour, to industry devoted to the manufacture of elements, devices and systems applicable to wastewater purification.

### ANTECEDENTS

The applicant knows many devices and systems applicable to purification and recycling of wastewater generated by industrial processes and containing certain toxic/ hazardous pollutants to be eliminated, both in case of disposal or recycling of the wastewater.

The most useful methods separate polluting elements dissolved in water through precipitation and therefore variate physical & chemical parameters in polluted water, for example acidity conditions, redox potential, oxygen concentration or temperature.

These systems require wastewater streams to be furtherly treated, in order to eliminate those compounds difficult to separate via precipitation, since this method sometimes turns out to be unable to eliminate every pollutant and to regenerate the polluted water flow.

The applicant also knows wastewater purification processes based on osmosis and reverse osmosis, which are typically applicable only to concrete cases, and hence their use is not widespread in industry.

The applicant is aware of the existence of different purification processes based on the distillation of liquid waste present in water, although these methods are basically developed for highly specialized applications, such as sea water desalination for drinking or irrigation purposes.

The operation of those water purification processes via distillation is based on bringing heat to the effluent, i.e. water, in closed volumes. The effluent includes dissolved chemical compounds whose vapour pressure is greater than water pressure, so heat increase allows water evaporation and water separation from chemical compounds.

Then, evaporated water can recover its liquid state via a simple condensation process, thus obtaining liquid water almost totally free of foreign elements, and this absence of compounds is such that usually some compounds have to be added to water to make it drinkable.

However, the above mentioned process, widely known by any expert, presents an important inconvenience: to make the liguid evaporate, temperature should be strongly increased, far beyond evaporation temperature, thus requiring a relevant quantity of energy to be supplied to the process. But evaporation temperature depends on the pressure existing inside the container in which the process is taking place.

On the other hand, the applicant is not aware of the existence of any other process based on distillation, specially designed for wastewater purification, and suitable for applications of industrial wastewater generated by electrolysis, which present characteristics very adequate for this application.

The applicant is not aware of the existence of any device based on such a process that is applicable both to sewage & industrial liquid waste purification and to the elimination of industrial waste mixed with vapour.

### DESCRIPTION OF THE INVENTION

The apparatus to clean vapour fluids generated by circuits has been designed to satisfactorily solve the different aspects of the above mentioned problems and makes up a real novelty in its application field, since the device is able to purify industrial liquid effluents, preferably those generated by electolysis processes, through water evaporation in closed containers, with heat addition and in a controlled atmosphere.

To be precise, the invention consists of an evaporation chamber in which inner temperature and pressure can be varied, thus reducing water vapour pressure to a point that water evaporation is made possible at around 30°C temperature, solving the problem of high energy consumption needed to reach evaporation temperature. Moreover, this purification process optionally allows to recover heat flows generated by the industrial processes that generate the effluents and even their emission temperature, to reach evaporation temperature.

It is important that the liquid effluent to be submitted to the cleaning process with the device of the present invention contains no dissolved compounds of density lower than water. This fact would imply the separation not to be correct. In case these compounds exist, compliance with the correspondant wastewater treatment legislation must be verified, or at least that they are within the allowed limits.

As for technical characteristics of the invention, the evaporation chamber, feeded from an adequate reservoir, produces a certain flow of water vapour when heated, and this vapour flow is conducted to a separator. Also a flow of dense compounds, not evaporated, will be deposited in a different container. This evaporation produces a first elimination of waste: the compounds contained in water and denser than water.

The separator is designed to obtain the second separation of those compounds whose vapour pressure is slightly higher than water vapour pressure and eventually of the solid particles carried by the vapour stream.

Therefore, the separator consists of a closed container with two opposed accesses, one allowing the polluted vapour stream inlet and the other allowing the clean water vapour to flow out. In front of the vapour inlet, the separator incorporates a tabular body, inclined and negatively sloped, and with a canalisation in its bottom, so that, as the incoming water vapour stream hits the tabular body, the solid particles present in the vapour remain adhered to it, forcing the temperature to decrease and the compounds included in vapour to liquefy. The pressure of these compounds is slightly higher than water pressure. Condensate is recovered in the bottom canalisation and purged off.

Purified water vapour stream - that can be accelerated with appropriate aspiring fans - is driven from the separator to a cooler in order to liquefy it, thus obtaining liquid water suitable for discharging in public collectors or for feeding its own original industrial process.

Optionally, purified water vapour stream from the separator can be freely released to the astmosphere without passing through the cooler.

The application of the device described in the present invention is preferably the purification of effluents generated by electrolysis plants, since the characteristics of this type of effluents make them adequate to be treated by this device with satisfactory results. The cleaning apparatus should be placed near the cited plants, in order to profit from heat emissions generated by electrolytic processes and related machinery, thus allowing important energy savings and reducing effluent purification costs.

Also, the present invention allows to clean any industrial waste mixed with vapour.

Finally, it is a system usable for cleaning wastewater, allowing pH regulation and pollutant gas elimination in a mechanical way, without having to add any chemical product.

### DESCRIPTION OF THE DRAWINGS

In order to complement the present description and to better understand the characteristics of the invention, a series of drawings and practical examples - not limitative - are included:

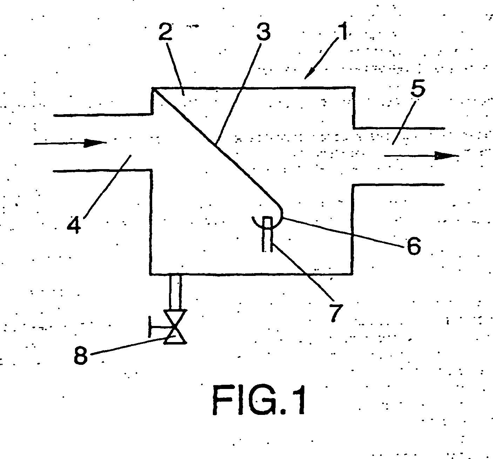

Figure 1, shows a schematic representation of the separator included in the apparatus to clean vapour fluids generated by circuits, in which the situation and constitution of the tabular body included in the separator can be seen.
Figure 2. shows a scheme of the invention in a wastewater treatment plant via evaporation, applicable to pH regulation and polluting gas elimination, an example of how purified vapour can be directly released to the atmosphere, without any previous cooling.
Figure 3. shows a scheme of a wastewater treatment plant similar to the previous one, another example of how part of the purified vapour can be directly released to the atmosphere, and part of it liquefied.
Figure 4. shows a third possibility of the invention, in which all the vapour is condensed.

### PREFERENT IMPLEMENTATION OF THE INVENTION

According to the figures, and more specially to Figure number one, it can be seen how the apparatus to clean vapour fluids generated by circuits is formed by a separator (1), in a closed volume (2), with a polluted vapour inlet (4) opposed to a clean vapour exit (5) inside a chamber (2) containing a tabular body (3), inclined and negatively sloped with regard to the vapour inlet (4). This tabular body (3) has a bottom canalisation (6) and a discharge tube (7) leading the liqueflate and the particles adhered to the tabular body (3) to the base of the chamber (2) from where they are purged off (8).

The separator (1) is to be placed at the exit of the polluted vapour, which becomes clean when passing through it.

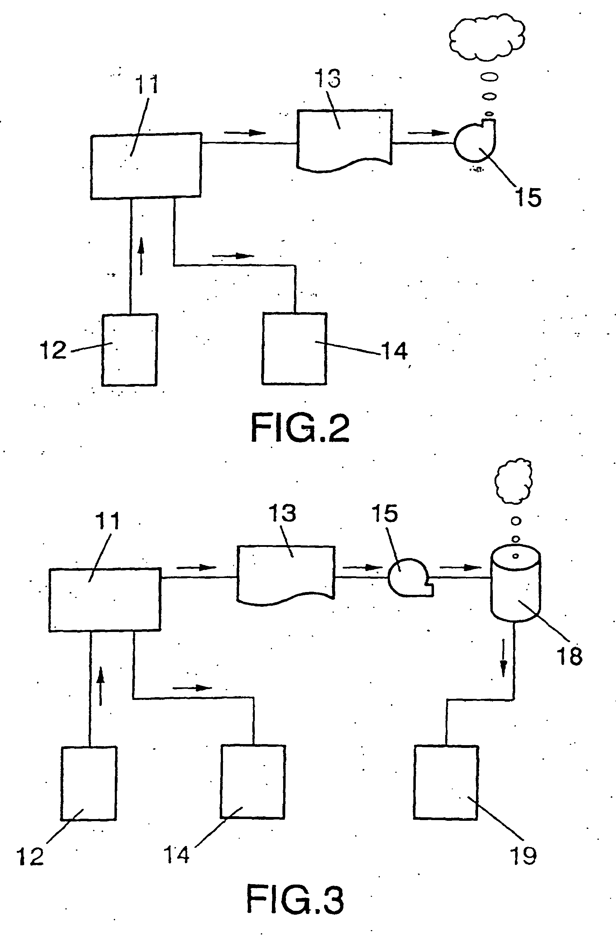

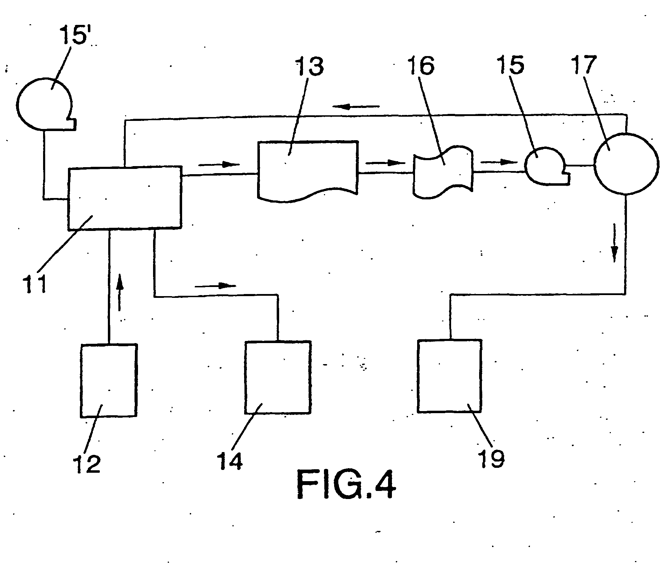

The device, as shown in the different examples of Figures 2, 3, and 4, also counts on a evaporation chamber (11), feeded with wastewater from a reservoir (12), in which is generated a polluted water vapour stream that is likely to be accelerated with a blower (15') and driven to the separator (13). There, vapour is purified, generating a purified water flow that is driven through an aspirator (15) to a cooler (18) as shown in Figure 3, to a condenser, as shown in Figure 4, or simply directly released to the atmosphere, as shown in Figure 2.

The invention incorporates a reservoir (14) to collect the compounds not evaporated in the evaporation chamber (13) and thus separated from the vapour, and optionally a conventional vapour cleaner (16).

The evaporation chamber (11) consists of a closed volume in which a certain amount of industrial effluents is heated by conventional means and kept in the adequate pressure conditions to allow water evaporation at a temperature below 30°C.

So, the vapour generated in the evaporation chamber (11) is firstly separated from its non evaporated dense compounds, that are collected in a reservoir (14). Then, in the separator (1), the rest of the compounds - that have a vapour pressure slightly higher than water vapour - is eliminated and the small solid particles carried by the vapour stream remain adhered on the tabular body (3) and can be purged off (8).

It is worth mentioning that the invention is a system able to regulate pH without the addition of chemical products, since pH regulation and polluting gas elimination is performed only by mechanical means.

## Claims

1. ^{ST}. Apparatus for cleaning vapour fluids generated by circuits, comprising an evaporation chamber (11) feeded from a reservoir (12), in which a certain amount of polluted water vapour stream is generated, optionally accelerated with a blower, and driven to a separator (1), in which separator (1) has a closed chamber (2), which has a polluted vapour inlet (4) facing a clean vapour exit (5) in opposed walls of the chamber (2), and incorporates a tabular body (3), inclined with regard to the vertical and sloped downwards with regard to the vapour inlet (4) so that the incoming vapour impacts against said tubular body, the tabular body (3) forms a channel (6) at its bottom with a discharge tube (7), which conducts the liquids and the particles adhered to the tabular body (3) to the chamber base (2), where they are purged off (8).

## Patentansprüche

1. Ein Gerät zur Reinigung von Flüssigkeiten, die durch Dampfentwicklung in geschlossenen Systemen entstanden sind, eine komprimierte Verdampfungskammer(11), die über einen Tank(12) gefüllt wird, in der eine gewisse Menge an verschmutztem Wasserdampf erzeugt wird, optionsweise kann dies durch ein Gebläse beschleunigt werden, und zu einer Trennvorrichtung(1) getrieben wird, die eine geschlossene Kammer(2) enthält, welche einen verschmutzten Dampfeinlass (4) und dem gegenüber einen sauberen Dampfauslass(5) an gegenüber liegenden Wänden der Kammer(2) besitzt und mit einer röhrenförmigen Struktur (3) ausgestattet ist, die schräg zur Vertikalen liegt und im Bezug auf den Dampfeinlass (4) nach unten geneigt ist, sodass der eingelassene Dampf gegen die besagte rohrförmige Struktur stößt, die röhrenförmige Struktur bildet an seinem unteren Ende einen Kanal (6) mit einem Ablassrohr (7), welches die Flüssigkeiten und anhaftenden Partikel zur rohrförmigen Struktur (3), zur Kammerbasis leitet, wo sie abgeführt werden (8).

## Revendications

1. Appareil pour nettoyer les fluides vapeur générés par un circuit, comprenant une chambre d'évaporation (11) alimentée par un reservoir (12), dans lequel une certaine quantité de vapeur d'eau polluée est générée, optionnellement accélérée avec un souffleur et conduite vers un séparateur (1), lequel séparateur (1) a une chambre fermée (2), qui possède une entrée de vapeur polluée (4) faisant face à une sortie de vapeur propre (5) dans les parois opposées de la chambre (2) et incorpore un corps tubulaire (3) incliné par rapport à l'entrée de vapeur (4) de façon que la vapeur entrante impacte contre le dit corps tubulaire. Le corps tubulaire (3) forme un canal (6) dans sa partie basse avec un tube de décharge (7) qui conduit les liquides et les particules adhérés au corps tubulaire (3) vers la base de la chambre (2) où ils sont purgés (8).
